Europäisches Patentamt

**European Patent Office**

**Office européen des brevets**

(11) Veröffentlichungsnummer: **0 089 608**
A2

(12) # EUROPÄISCHE PATENTANMELDUNG

(21) Anmeldenummer: 83102558.0

(22) Anmeldetag: 15.03.83

(51) Int. Cl.³: **H 01 M 4/42**
    **B 22 F 9/08**

(30) Priorität: 18.03.82 DE 3209978

(43) Veröffentlichungstag der Anmeldung:
28.09.83 Patentblatt 83/39

(84) Benannte Vertragsstaaten:
AT BE CH DE FR GB IT LI LU NL SE

(71) Anmelder: Grillo Werke AG
Weseler Strasse 1
D-4100 Duisburg-Hamborn(DE)

(72) Erfinder: Glaeser, Wolfgang, Dr.-Ing.
Siemensstrasse 29
D-3380 Goslar 1(DE)

(74) Vertreter: Werner, Hans-Karsten, Dr. et al,
Deichmannhaus am Hauptbahnhof
D-5000 Köln 1(DE)

(54) Verfahren zur Herstellung von Zinkpulver für alkalische Batterien.

(57) Zinkpulver für alkalische Batterien mit einem Quecksilbergehalt von 2 bis 10 Gew.-% wird hergestellt, indem man eine homogene Schmelze der Legierung in Wasser einfließen läßt, das Granulat abtrennt, vermahlt und gewünschtenfalls die Anteile an Feinkorn und Grobkorn durch Sieben entfernt.

EP 0 089 608 A2

- 1 -

Verfahren zur Herstellung von Zinkpulver für alkalische
Batterien

Gegenstand der vorliegenden Erfindung ist ein Verfahren
zur Herstellung von Zinkpulver mit einem Quecksilbergehalt von 2 bis 10 Gew.-%, wie es für alkalische Batterien benötigt wird. Für den Einsatz in alkalischen Batterien ist Zinkpulver nur dann geeignet, wenn es ausreichend wenig Wasserstoff-Gasentwicklung im Elektrolyten auch ohne Stromabgabe zeigt. Zu diesem Zweck wird
Zinkpulver mit Hilfe von Quecksilber passiviert. Diese
Passivierung kann entweder als sogenannte nachträgliche
Amalgamierung nach der Pulverherstellung erfolgen oder
aber auch gemäß DE-OS 24 41 356 durch Pulverisierung
von Zinkamalgam.

Die Herstellung von mit Quecksilber legiertem Zinkpulver durch Zerstäuben im Gasstrom gemäß DE-OS
24 41 356 ist mit erheblichen Nachteilen verbunden.
Einer dieser Nachteile ist der erhebliche Quecksilberverlust beim Zerstäuben. Während des Zerstäubens verdampfen nämlich beträchtliche Mengen des Quecksilbers
aus den sich bildenden und erstarrenden Zinkpulverteilchen. Es wurde festgestellt, daß bis zu 10 % des
in der geschmolzenen Legierung vorhandenen Quecksilbers
beim Zerstäuben in den Verdüsungsgasstrom übergehen
können. Dieser Quecksilberverlust, der eine erhebliche
Umweltgefährdung darstellen kann, und daher nur durch
aufwendige Gaswäscheverfahren aus der Verdüsungsluft
entfernt werden muß, ist jedoch nur ein Teil des Problems. Die Verdampfungsrate des Quecksilbers aus dem
Zinkamalgampulver ist nämlich proportional der spezifischen Oberfläche der jeweiligen Zinkpulverteilchen.
Kleinere Pulverteilchen geben mehr Quecksilber ab als
große. Gerade die kleineren Teilchen benötigen jedoch
relativ mehr Quecksilber als die großen, um die Gasbildung zu unterdrücken, da dies wiederum ein der Oberfläche proportionaler Vorgang ist.

- 2 -

Die unerwünschte Verdampfung des Quecksilbers aus den Zinkpulverteilchen kann somit dazu führen, daß gerade die für die Gasentwicklung im alkalischen Elektrolyten kritischen kleinen Pulverteilchen unzureichend durch Quecksilber passiviert sind.

Die Erfindung hat sich die Aufgabe gestellt, ein verbessertes Verfahren zur Herstellung von Zinkpulver mit einem Quecksilbergehalt von 2 - 10 Gew.-% für alkalische Batterien zu entwickeln, welches die oben gezeigten Nachteile des Verfahrens gemäß Stand der Technik vermeidet.

Diese Aufgabe wird überraschenderweise dadurch gelöst, daß man eine homogene Schmelze der Zink-Quecksilberlegierung in Wasser einfließen läßt, das so erhaltene Granulat, welches eine Korngröße von 1 bis 8 mm aufweist, vom Wasser abtrennt, das so erhaltene abgetrennte Granulat zu Pulver einer Korngröße von 70 bis 600 µ vermahlt und gewünschtenfalls die Anteile an Feinkorn und Grobkorn durch Sieben entfernt.

Besonders vorteilhaft ist die Vermahlung in klassierenden Mühlen, da das aus dem Granulat entstehende Pulver geeigneter Größe vor der weiteren Mahlung aus der Mühle entfernt wird.

Zur Durchführung des erfindungsgemäßen Verfahrens wird eine Zink-Quecksilberlegierung der für Batteriepulver erforderlichen Zusammensetzung geschmolzen. Anstelle der fertigen Legierung kann auch die erforderliche Menge Quecksilber einer Zinkschmelze so zugegeben werden, daß es sich hierin homogen löst. Die so erhaltene homogene Schmelze wird so in Wasser eingetragen, daß sich ein Granulat mit einer Korngröße von 1 bis 8 mm bildet. Diese Granulate sind spratzig bis länglich und haben meist Durchmesser zwischen 0,2und 5 mm. Das so erhaltene Granu- lat wird vom Wasser abgetrennt, beispielsweise durch Zentrifugieren. Das trocken geschleuderte Granulat kann direkt der Vermahlung zugeführt werden. Die Vermahlung kann in allen ausreichend stabilen Mühlen erfolgen. Tieftemperatur- und Fryma-Korundscheibenmühlen haben sich gut bewährt. Optimale Ergebnisse werden mit klassierenden Mühlen erzielt, bei denen die entstehenden Pulver vor weiterer Mahlung aus der Mühle entfernt werden. Gewünschtenfalls kann unerwünschtes Feinkorn und unerwünschtes Grobkorn durch Sieben entfernt werden.

Bei dem erfindungsgemäßen Verfahren ist die Verdampfung von Quecksilber sehr gering, da die relativ großen Granulate eine relativ kleine Oberfläche aufweisen. Da die Abkühlung der Granulate nicht im Gasstrom erfolgt, welcher die Quecksilberverdampfung erheblich vergrößert, sondern sehr viel rascher im Wasserbad erfolgt, ist der Quecksilberverlust vernachlässigbar gering. Bei der Pulverisierung im Gasstrom werden etwa 1 m³ Gas pro kg Zinkpulver benötigt. Diese großen Gasmengen müssen anschließend wieder gereinigt werden.

Beim erfindungsgemäßen Verfahren weisen die Granulate eine homogene Quecksilberverteilung auf, so daß auch der Quecksilbergehalt unabhängig von der Teilchengröße des Pulvers konstant bleibt.

Der zusätzliche Arbeitsvorgang des Vermahlens wird erstaunlicherweise dadurch überkompensiert, daß der Anteil an Feinkorn und Grobkorn geringer ist als bei der Zerstäubung im Gasstrom. Üblicherweise können nur weniger als 85 % des bei der Zerstäubung im Gasstrom anfallenden Pulvers für Batterien eingesetzt werden. Das Über- und Unterkorn muß auf alle Fälle durch Sieben abgetrennt werden. Dieses Fehlkorn belastet aufgrund des Quecksilbergehaltes die Wirtschaftlichkeit des Zerstäubungsverfahrens. Aufgrund der Preisunterschiede zwischen Zink- und Quecksilber kostet das Quecksilber in einer 5%igen Legierung mit Zink praktisch das gleiche wie die 95 Gew.-% Zink. Die Kosten für die Wiederaufarbeitung des Fehlkorns sind beim erfindungsgemäßen Verfahren erheblich geringer. Hinzu kommt, daß das Feinkorn im allgemeinen nicht ohne weiteres wieder eingeschmolzen werden kann.

Das erfindungsgemäße Verfahren ist in dem nachfolgenden Beispiel näher erläutert:

Beispiel

In einem 251 Graphittiegel werden 100 kg Feinzink auf 460°C erwärmt und geschmolzen. In die Schmelze werden 10 kg einer 50%igen Quecksilber-Zink-Vorlegierung so eingetragen, daß sich das Quecksilber unter der Oberfläche der Schmelze löst und in dieser homogen verteilt. Nach einer homogenen Lösung des Quecksilbers in der Schmelze wird der Tiegel ca. 2 m über einer mit entionisiertem Wasser gefüllten Wanne (1 x 1 x 1 m³) so gekippt, daß die Schmelze in einer Breite von ca. 10cm als dünner Film über den Rand des Tiegels fließt. Während des Fallens des Films vom Tiegel zur Wasseroberfläche zerreißt der Film in einzelne Tröpfchen, die beim Auftreffen auf das Wasser z.T. weiterzerfallen und als Granulat erstarren. Durch geeignete Steuerung des Kippens des Tiegels entstehen spratzige bis längliche Granulate von 2 bis 5 mm charakteristischem Durchmesser. Die Granulate werden durch Zentrifugieren vom Wasser getrennt und das Wasser kann wiederverwendet werden. Die trocken geschleuderten Granulate werden in einer Fryma-Korundscheibenmühle gemahlen, wobei ein

- 5 -

Pulver folgender Kornverteilung entsteht:

|       |   |       |       |
|-------|---|-------|-------|
|       |   | 70 µ  | 4 %   |
| 70    | - | 250 µ | 45 %  |
| 250   | - | 500 µ | 45 %  |
| 500   | - | 600 µ | 6 %.  |

Die Analyse der verschiedenen Pulverfraktionen ergibt einen konstanten Quecksilbergehalt unabhängig von der Teilchengröße. Die einzelenen Fraktionen werden auf Passivierung untersucht und ergeben eine gute und gleichmäßige Passivierung.

Patentansprüche

1. Verfahren zur Herstellung von Zinkpulver mit einem Quecksilbergehalt von 2 bis 10 Gew.-% für alkalische Batterien, dadurch gekennzeichnet, daß man

    a) eine homogene Schmelze der Zink-Quecksilberlegierung in Wasser einfließen läßt,

    b) das so erhaltene Granulat der Korngröße 1 bis 8 mm vom Wasser abtrennt,

    c) das abgetrennte Granulat zu Pulver einer Korngröße von 70 bis 600 µ vermahlt und

    d) gewünschtenfalls die Anteile an Feinkorn und Grobkorn durch Sieben entfernt.

2. Verfahren gemäß Anspruch 1, dadurch gekennzeichnet, daß die Vermahlung in klassierenden Mühlen durchgeführt wird.